# EUROPÄISCHE PATENTANMELDUNG

(11) **EP 4 663 308 A1**
(43) Veröffentlichungstag der Anmeldung: **17.12.2025**
(21) Anmeldenummer: 25182272.2
(22) Anmeldetag: 12.06.2025
(51) Int. Cl.: B06B 1/16, E01C 19/22, E02D 3/074, H02K 7/06

(54) **INTEGRIERTER MECHANISCHER SCHWINGUNGSERREGER**

(30) Priorität: 12.06.2024 DE 102024116463; 07.06.2025 DE 102025122495
(71) Anmelder: Ammann Schweiz AG, 4901 Langenthal (CH)
(72) Erfinder: Malaschewski, Armin, 56581 Ehlscheid (DE); Wilhelm, Mirco, 53783 Eitorf (DE)
(74) Vertreter: Euscher, Christoph

(57) **Zusammenfassung**

Die Erfindung betrifft einen auch als Unwuchtmotor bezeichenbaren mechanischen Schwingungserreger (1), insbesondere um relativ große Massen in vergleichsweise niedrige Schwingungsfrequenzen zu versetzen, und im Speziellen für einen Einsatz in Baumaschinen.

Erfindungsgemäß ist dabei vorgesehen, dass ein Antriebsmotor zumindest teilweise in ein auf einer Rotationswelle (4) angeordnetes Umlaufgewicht (3) integriert ist.

## Beschreibung

Die Erfindung betrifft einen auch als Unwuchtmotor bezeichenbaren mechanischen Schwingungserreger zur Erzeugung einer mechanischen Schwingung durch die Rotation einer zur Rotationsachse asymmetrischen Masse.

### Stand der Technik

Aus dem Stand der Technik bekannte mechanische Schwingungserreger, insbesondere für Baumaschinen zur Bodenverdichtung, wie beispielsweise Rüttelplatten, weisen in der Regel voneinander getrennt eine Antriebseinheit und eine von der Antriebseinheit angetriebene Abtriebseinheit auf, beispielsweise einen jeweils für sich ausgeführten Antriebsmotor und eine jeweils für sich ausgeführte Erregereinheit, die in der Regel ein in Rotation versetzbares Umlaufgewicht als Unwucht zur Schwingungserregung aufweist.

Für eine raumsparende Integration von Antriebsmotor und Erregereinheit ist es bekannt, dass ein elektrisch ausgeführter Antriebsmotor und ein Unwuchterreger auf derselben Welle angeordnet sein können.

So ist beispielsweise in der EP3862487A1 eine Vibrationsplatte mit Elektroantrieb beschrieben, bei welchem ein Elektromotor auf einer gemeinsamen Welle angeordnet in einen Unwuchterreger integriert ist.

Damit weisen die bekannten Anordnungen aus einem Antriebsmotor und einer Erregereinheit aber weiterhin eine relativ hohe Teilevielfalt und eine relativ raumgreifende Bauweise auf.

### Offenbarung der Erfindung

Aufgabe der vorliegenden Erfindung ist es, eine Lösung zur Verbesserung eines mechanischen Schwingungserregers anzugeben, insbesondere um relativ große Massen raumsparend in vergleichsweise niedrige Schwingungsfrequenzen zu versetzen, im Speziellen für einen Einsatz in Baumaschinen.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß vorgesehen ist ein mechanischer Schwingungserreger, auch als Unwuchtmotor bezeichenbar, insbesondere um relativ große Massen in vergleichsweise niedrige Schwingungsfrequenzen zu versetzen, und im Speziellen bzw. insbesondere für einen Einsatz in einer Baumaschine, insbesondere einer Bodenverdichtungsvorrichtung, wobei ein Antriebsmotor zumindest teilweise in ein auf einer Rotationswelle angeordnetes Umlaufgewicht mit einer zur Rotationsachse asymmetrischen Masseverteilung integriert ist.

Dabei ist, anders formuliert, unter einem Umlaufgewicht eine um eine Rotationsachse angeordnete und umlaufende Unwuchtmasse zu verstehen, wobei die Rotationsachse nicht mit der Hauptträgheitsachse der Unwuchtmasse übereinstimmt, und dessen Funktion es ist, bei einer Drehung um die Rotationsachse eine Schwingung zu erzeugen. Der mechanische Schwingungserreger weist ein Umlaufgewicht mit einem in das Umlaufgewicht zumindest teilweise integrierten Antriebsmotor auf, der eingerichtet, das Umlaufgewicht in Rotation zu versetzen.

Eine Integration Alternativ und/oder ergänzend kann das Umlaufgewicht bei der Integration eines Motors in das Umlaufgewicht von Komponenten eines Weiterhin bedeutet eine Integration des Antriebsmotors in das Umlaufgewicht dabei, dass entweder ausgehend von dem rotierbaren Umlaufgewicht das Umlaufgewicht mit elektromagnetischen Kraftelementen wie Dauermagneten oder Spulen versehen wird, oder der Körper des Umlaufgewichts selbst, beispielsweise aufgrund einer Induktion von Wirbelströmen, oder durch eine Magnetisierung des Umlaufgewichts selbst, zum Kraftelement wird.

Insbesondere kann das Umlaufgewicht ein unverzichtbares motoreigenes, für eine Erzeugung oder Synchronisation einer Drehbewegung erforderlichen Funktionselement eines Antriebsmotors ausformen. Dabei kann das Umlaufgewicht hinsichtlich seiner Verteilung um die Rotationsachse bzw. Rotationswelle im Hinblick auf eine Rotationssymmetrie bewusst eine Asymmetrie aufweisen.

Ferner sind unter den Kraftelementen eines Motors diejenigen Elemente zu verstehen, welche sich, insbesondere aufgrund elektrischer oder magnetischer Felder, gegeneinander eine Kraft ausüben, anziehend oder abstoßend, um einen Rotor des Motors gegenüber einem Stator zu bewegen.

Ein derart beispielsweise permanent magnetisiertes, durch Wirbelströme durchflossenes, oder mit elektrischen Spulen oder Permanentmagneten durchsetztes Umlaufgewicht kann durch eine externe Anregung, beispielsweise durch das, insbesondere seitliche, Feld eines Stators, direkt, d.h. insbesondere ohne eine Ausbildung weiterer Komponenten wie Polen, Polschuhen, in Rotation versetzt werden.

In einer ersten Ausgestaltungsvariante kann Umlaufgewicht ausgeführt sein, dass in dem Umlaufgewicht Wirbelströme induzierbar sind, dies es ermöglichen, das Umlaufgewicht durch äußerlich einwirkende Magnetfelder in Rotation zu versetzen.

In einer zweiten Ausgestaltungsvariante kann das Umlaufgewicht ausgeführt sein, dass in dem Umlaufgewicht magnetisch wirkende Körper, insbesondere Dauermagnete oder Magnetspulen, eingelassen sind, dies es ermöglichen, das Umlaufgewicht durch äußerlich einwirkende Magnetfelder in Rotation zu versetzen

In einer dritten Ausgestaltungsvariante kann das Umlaufgewicht derart ausgeführt sein, dass es selbst als, insbesondere vielpoliger, parallel zur Rotationsachse magnetisierter Permanentmagnet ausgeführt ist.

Dabei können die genannten Permanent- bzw. Dauermagnete vorteilhaft als Neodym-Magnete ausgeführt sein.

Den drei Ausgestaltungsvarianten gemeinsam ist, dass der mechanische Schwingungserreger ein, insbesondere magnetisch, direkt angetriebenes, insbesondere permanent- und/oder ferromagnetisch und/oder elektromagnetisch, insbesondere durch die Lorentzkraft antreibbares, Umlaufgewicht aufweist.

Der mechanische Schwingungserreger weist ein Umlaufgewicht auf, welches als Kraftelement ausgeführt ist und eingerichtet ist, durch äußere Einwirkung bewegt zu werden.

In einer vorteilhaften Ausgestaltung des Umlaufgewichts sind in dem Umlaufgewicht Wirbelströme induzierbar oder magnetisch wirkende Körper eingelassen, dies es ermöglichen, das Umlaufgewicht durch äußerlich einwirkende elektromagnetische Felder mittels der Lorentzkraft in Rotation zu versetzen.

Vorteilhaft formt das Umlaufgewicht dabei ein direkt antreibbares Kraftelement aus, welches eines für einen Elektromotor unverzichtbare, für dessen Funktion erforderliche Komponente darstellt.

Aus Sicht des Motors stellt das Umlaufgewicht somit einen motoreigenen Bestandteil dar, ohne den eine Funktion des Motors nicht gegeben ist, das Umlaufgewicht bildet einen Funktionselement des Antriebsmotors aus, es ist ein wesentliches Element seines Funktionsprinzips.

Die Ausrichtung des Magnetfelds innerhalb des Umlaufgewichts erfolgt dabei in axialer Richtung, parallel zur Rotationsachse. Die durch Wirbelströme oder magnetisch wirkende Körper erzeugten Magnetfelder stehen in axialer Richtung, parallel zur Rotationsachse, vorzugsweise senkrecht auf der Seite des Umlaufgewichts. Radial verlaufende, aus einem Umfangsbereich heraustretende Feldlinien sind vorteilhaft nicht vorhanden, sie werden für einen Antrieb nicht genutzt. Die Bewegung des Umlaufgewichts erfolgt parallel, seitlich neben zu einem vorteilhaft als Scheibe ausgeführten Stator. Der Stator kann vorteilhaft scheiben- oder ringförmig ausgeführt sein und zu seinen Außenseiten, seitlich aus der Scheiben- oder Ringfläche heraus, ein axial orientiertes Magnetfeld erzeugen. Ein Radius des Umlaufgewichts kann größer ausgeführt sein als ein Radius des Stators. Insbesondere kann eine Kreislinie, entlang derer die Kraftelemente, insbesondere die Magnetspulen, des Stators angeordnet sind, kleiner als ein Radius des Umlaufgewichts sein, das Umlaufgewicht wird seitlich angetrieben und vom Stator nicht umschlossen.

Der mechanische Schwingungserreger kann somit vorteilhaft derart ausgeführt werden, dass das Umlaufgewicht nach dem Prinzip eines Scheibenläufermotors angetrieben wird.

Vorteilhaft weist das Umlaufgewicht an zumindest einer axialen Seite einen Kreisbogen, insbesondere einen Kreisring oder einen Sektor eines Kreisrings, magnetisch wirkender Körper auf. Vorteilhaft sind bzw. werden diese entlang des Kreisbogens alternierend polarisiert. Ein axial neben dem Umlaufgewicht angeordneter Stator zur Bewegung des Umlaufgewichts weist vorteilhaft eine analog ausgeführte Anordnung von Spulen oder Permanentmagneten auf, sodass in Abhängigkeit vom Drehwinkel zwischen Stator und Umlaufgewicht abwechselnd eine Anziehung und Abstoßung zwischen den auf parallel angeordneten Kreisscheiben oder Kreissektoren erfolgt. Wenigstens eine Seite, entweder der Stator oder das Umlaufgewicht, weist in ihrer Polarisation umkehrbare Magnetkörper, beispielsweise Magnetspulen, auf, so dass durch geeignete Anschaltung eine fortlaufende Bewegung bzw. Drehung des Umlaufgewichts erzielbar ist. Vorteilhaft, insbesondere im Bereich der Rotationswelle, kann der mechanische Schwingungserreger einen Sensor zur Drehwinkelerfassung des Rotors gegenüber dem Stator aufweisen. Eine Steuerung zur Anschaltung der Magnetkörper kann eingerichtet sein, von dem Sensor zur Drehwinkelerfassung erhaltene Drehwinkelinformation für die Steuerung einer Bewegung bzw. Drehbewegung, insbesondere zur Steuerung einer Schwingungsfrequenz, zu verwenden.

In einer vorteilhaften Ausgestaltung des mechanischen Schwingungserregers ist das Umlaufgewicht als Scheibensektor oder Ringsektor einer Wirbelstromscheibe ausgeführt. Dabei kann das Umlaufgewicht axial mehrschichtig aufgebaut und/oder, insbesondere radial, Isolationslinien, beispielsweise Einschnitte aufweisen, um die Effizienz des Wirbelstromantriebs zu verbessern. Insbesondere kann die als Scheiben- oder Ringsektor ausgeführte Wirbelstromscheibe die aus dem Stand der Technik bekannten Optimierungsmerkmale zur Verbesserung der Antriebsfunktion aufweisen.

Zudem kann ein Antriebsmoment des Umlaufgewichts dadurch erhöht werden, dass das Umlaufgewicht axial beidseitig einen Kreisbogen, insbesondere einen Kreisring, magnetisch wirkender Körper aufweist. Mit anderen Worten kann das Umlaufgewicht durch zwei Statoren angetrieben werden, wozu das Umlaufgewicht beispielsweise auf beiden Scheibenseiten, bei einem größeren Umlaufgewicht auf beiden Stirnseiten, (elektro-) magnetische Kraftelemente, d.h. Magnetspulen, Permanentmagnete, Wirbelstrombereiche, einen Eigenmagnetismus, oder durch das Umlaufgewicht einteilig von Scheibenseite/Stirnseite zu Scheibenseite/Stirnseite hindurchgeführte Kraftelemente aufweist.

In einer vorteilhaften Ausgestaltung ist das Umlaufgewicht einteilig ausgeführt. Dabei kann es in einer vorteilhaften Ausgestaltungsvariante die Form eines allgemeinen Zylinders, insbesondere die Form eines Kreiszylinders mit einer axial etwa mittig gelegenen kreissegmentförmigen Ausnehmung, aufweisen. Ein derartiger Körper kann axial beidseitig kreisförmige Stirnseiten aufweisen, auf welcher zur Maximierung eines Antriebsmoments ein geschlossener Kreis aus Kraftelementen anordenbar ist. Zugleich kann durch eine Ausnehmung zwischen den Stirnseiten, beispielsweise in Form eines Kreissektors oder eines Kreissegments, sehr einfach eine von ihrer Masse her in relativ breitem Rahmen skalierbare Unwucht hergestellt werden. Bei einer mehrteiligen Ausgestaltung mit sowohl rotationssymmetrischen als auch asymmetrischen Komponenten können die asymmetrischen Komponenten, insbesondere eine Unwuchtmasse, eine höhere Dichte als die symmetrischen Komponenten aufweisen.

Die Erfindung betrifft weiterhin eine Bodenverdichtungsvorrichtung zur Verdichtung eines Untergrundes, umfassend einen Unterwagen mit einer Grundplatte, einen Oberwagen, der schwingungsentkoppelt und in Kraft übertragender Weise mit dem Unterwagen verbunden ist und der zumindest einen vorbeschriebenen mechanischen Schwingungserreger aufweist, mittels dessen zumindest die Grundplatte des Unterwagens in eine Schwingung versetzbar ist.

Je nach Ausgestaltungsvariante einer derartige Bodenverdichtungsvorrichtung kann diese eine Mehrzahl von Schwingungserregern aufweisen, wodurch sich ein verringerter Raumbedarf des vorbeschriebenen Direktantriebs des Umlaufgewichts besonders positiv auswirkt.

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: eine Prinzipskizze eines ersten Ausführungsbeispiels eines mechanischen Schwingungserregers;
- Fig. 2: eine Prinzipskizze eines zweiten Ausführungsbeispiels eines mechanischen Schwingungserregers mit einer kreisringförmigen Anordnung von Magnetspulen;
- Fig. 3: eine Prinzipskizze eines dritten Ausführungsbeispiels eines mechanischen Schwingungserregers mit einer als Ringsektor ausgeführten Wirbelstromscheibe;
- Fig. 4: eine Prinzipskizze eines vierten Ausführungsbeispiels eines mechanischen Schwingungserregers mit zwei Statoren;
- Fig. 5: eine Prinzipskizze eines fünften Ausführungsbeispiels eines mechanischen Schwingungserregers mit beidseitig angetriebenen Umlaufgewicht;
- Fig. 6: eine Prinzipskizze eines sechsten Ausführungsbeispiels eines mechanischen Schwingungserregers mit einem mehrteiligen, beidseitig angetriebenen Umlaufgewicht;
- Fig. 7: eine Prinzipskizze ein weiteres Ausführungsbeispiels des mechanischen Schwingungserregers mit einem einteilig, beidseitig angetriebenen Umlaufgewicht;
- Fig. 8: eine Explosionsskizze eines weiteren Ausführungsbeispiels des mechanischen Schwingungserregers, bei welchem ein Radius des Umlaufgewichts den Radius des Stators übertrifft.

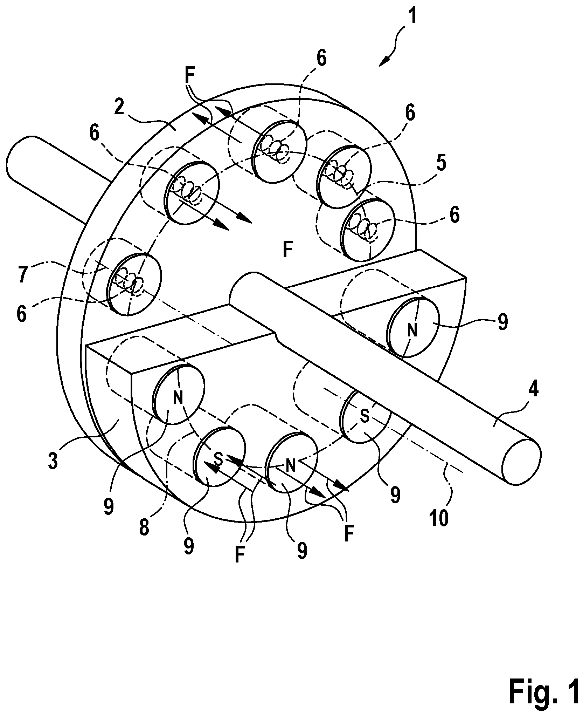

Aus Fig. 1 ist das Prinzip eines magnetisch direkt angetriebenen Umlaufgewichts ersichtlich.

Dabei weist der als Scheibenmotor ausgeführte mechanische Schwingungserreger 1 eine Statorscheibe 2 sowie zumindest ein als Kreissektor ausgeführtes Umlaufgewicht 3 auf, wobei die Kreismittelpunkte der Statorscheibe 2 und des Umlaufgewichts 3 nebeneinander auf einer gemeinsamen Rotationsachse bzw. Rotationswelle 4 liegen.

Der Kreissektor des Umlaufgewichts 3 weist im Ausführungsbeispiel der Fig. 1 einen Mittelpunktswinkel von 180° auf und ist somit als Halb(kreis-)scheibe ausgeführt.

Entlang einer Kreislinie 5 der Statorscheibe 2 sind gleichmäßig verteilt eine Anzahl von 2n, hier n=5, Magnetspulen 6 angeordnet, deren Spulenachse 7 parallel zur Rotationsachse bzw. Rotationswelle 4 orientiert ist.

Die Magnetspulen 6 sind eingerichtet, bei einem Stromdurchfluß, beispielsweise durch eine alternierende Wickelrichtung oder durch entsprechende Beschaltung mit einer alternierende Stromrichtung, entlang der Kreislinie 5 ein Magnetfeld F alternierender Richtung zu erzeugen.

Entlang einer Kreislinie 8 des Umlaufgewichts 3 sind über einen Mittelpunktswinkel von 180°, d.h. einem Halbkreis, gleichmäßig verteilt eine Anzahl von n, hier n=5, Permanentmagnete 9 angeordnet, deren Polarisationsachse 10 ebenfalls parallel zur Rotorachse 4 orientiert ist. Dabei stimmen ein Radius der Kreislinie 8, entlang welcher die Spulen 6 im Stator 2 angeordnet sind, sowie ein Radius der Kreislinie 8, entlang welcher die Permanentmagnete 9 im Umlaufgewicht 3 angeordnet sind, im Wesentlichen überein.

Weiterhin stimmen im Ausführungsbeispiel der Figur 1 auch die Kreisbögen zwischen benachbarten Spulen 6 auf der Statorscheibe 2 mit den Kreisbögen benachbarter Permanentmagnete 9 auf dem Umlaufgewicht 3 mit 180°/2n, d.h. hier 18°, überein, sodass die Permanentmagnete 9 des Umlaufgewichts 3 und die Spulen 6 der Statorscheibe 2 über einen Halbkreis kongruent zueinander anordenbar sind.

Das Umlaufgewicht 3 ist auf der Rotationsachse 4 drehbar gelagert, sodass sich die Permanentmagnete 9 des Umlaufgewichts 3 entlang der Kreislinie 8 bewegen können. In Abhängigkeit von durch die Spulen 6 der Statorscheibe 2 erzeugten Magnetfeldern F kann daher das Umlaufgewicht 3 angeregt werden, sich um einen Winkel von 180°/2n, d.h. hier 18°, zu drehen. Durch entsprechende elektrische Ansteuerung der Statorspulen 6 kann das Umlaufgewicht 3 nach Prinzip eines Scheibenmotors in eine kontinuierliche Drehung mit vorgebbarer Drehzahl versetzt werden.

Dabei wird durch den mechanischen Schwingungserreger 1 aufgrund der Asymmetrie des Umlaufgewichts 3 eine Vibration mit der Frequenz der Rotationsgeschwindigkeit des Umlaufgewichts 3 erzeugt, sodass dieser als Schwingungserreger, beispielsweise für den Betrieb von Verdichtungsvorrichtungen, einsetzbar ist.

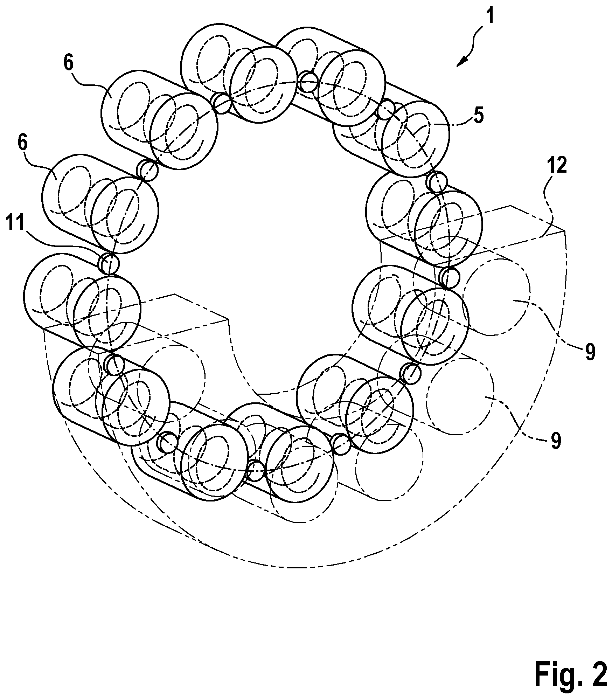

Fig 2 zeigt eine Prinzipskizze eines zweiten Ausführungsbeispiels eines mechanischen Schwingungserregers 1 mit einer kreisringförmigen Anordnung von n=6 Magnetspulen 6.

Dabei entspricht die Anordnung von Spulen 6 und Permanentmagneten 9 der Fig. 2 im Wesentlichen derjenigen der Fig. 1, wobei die Figur 2 keine Statorscheibe 2, sondern als Stator 2 lediglich eine der Fig. 1 entsprechende Anordnung von Spulen 6 entlang einer Kreislinie 5 darstellt. Zwischen den Spulen 6 sind Sensoren 11 dargestellt, welche gemeinsam eingerichtet sind, eine Stellung des Umlaufgewichts 3 in Relation zum Stator 2 zu erfassen, und die Ansteuerung der Spulen 6 über eine Closed-Loop zu ermöglichen.

Der besseren Darstellung halber wurde das hier die Permanentmagnete 9 und die ringsektorförmige Unwuchtmasse 12 umfassende Umlaufgewicht 3 lediglich durch unterbrochene Linien angedeutet.

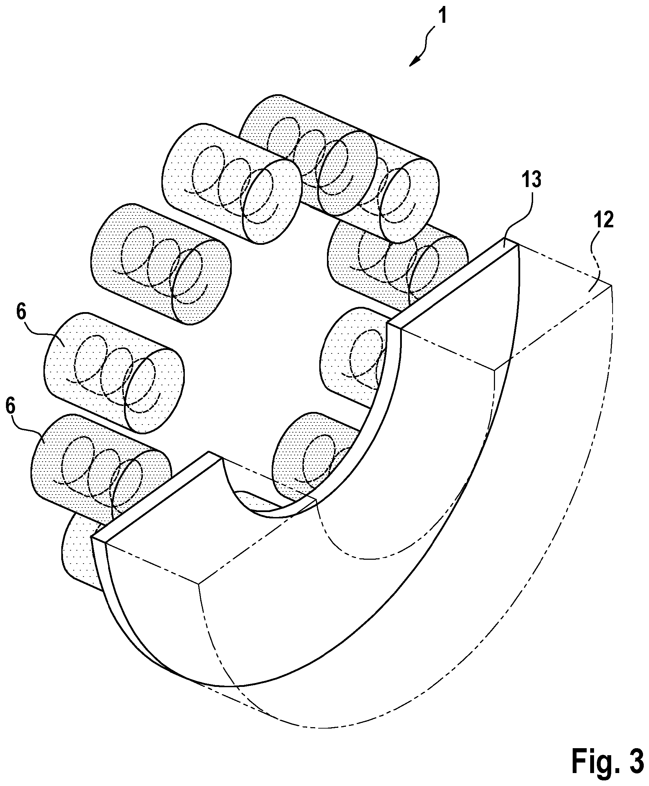

Figur 3 zeigt eine Prinzipskizze eines dritten Ausführungsbeispiels eines mechanischen Schwingungserregers 1 mit einem als Ringsektor ausgeführten Umlaufgewicht 3, welches eine Wirbelstromscheibe 13 aufweist.

Dabei zeigt Fig. 3 eine der Fig. 2 im Wesentlichen entsprechende Anordnung, bei welcher die Permanentmagnete 9 des Umlaufgewichts 3 durch die Wirbelstromscheibe 13 in Form eines nichtmagnetischen, leitfähigen Ringsektors, beispielsweise ausgeführt aus Kupfer, ersetzt sind. Die Asymmetrie der Anordnung ermöglicht, die als Ringsektor ausgeführte Wirbelstromscheibe 13 durch geeignete Induktion von Wirbelströmen in Rotation zu versetzen. Die durch die asymmetrische Wirbelstromscheibe 13 erzeugte Unwucht kann durch eine auf der Wirbelstromscheibe13 angeordnete ergänzende Unwuchtmasse 12, beispielsweise zu dieser kongruent, zusätzlich verstärkt werden.

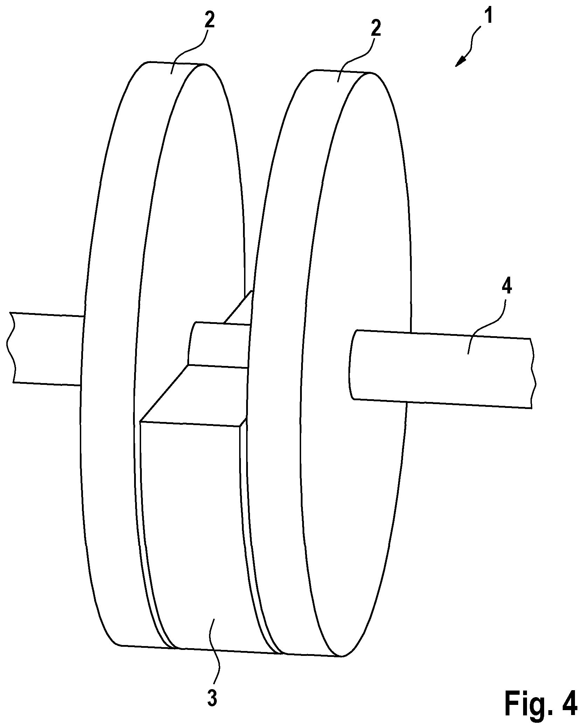

Fig. 4 zeigt ein Ausführungsbeispiel eines mechanischen Schwingungserregers 1 mit zwei Statorscheiben 2, zwischen denen ein Umlaufgewicht 3 in Form eines Kreissektors angeordnet ist. Die Details des Ausführungsbeispiels entsprechen dabei im Wesentlichen demjenigen der Figur 1, sodass auf die Darstellung der Spulen 6 und Permanentmagnete 9 verzichtet wurde.

Im vorliegenden Ausführungsbeispiel sind die beiden Statorscheiben 2 hinsichtlich der Anordnung der Spulen 6 identisch ausgeführt. Neben einer einfachen Verdoppelung der Antriebskräfte können sich die von den Spulen 6 generierten Magnetfelder summarisch überlagern, was zur Ausführung eines mechanischen Schwingungserregers 1 mit vergleichsweise stärkerer Motorleistung genutzt werden kann.

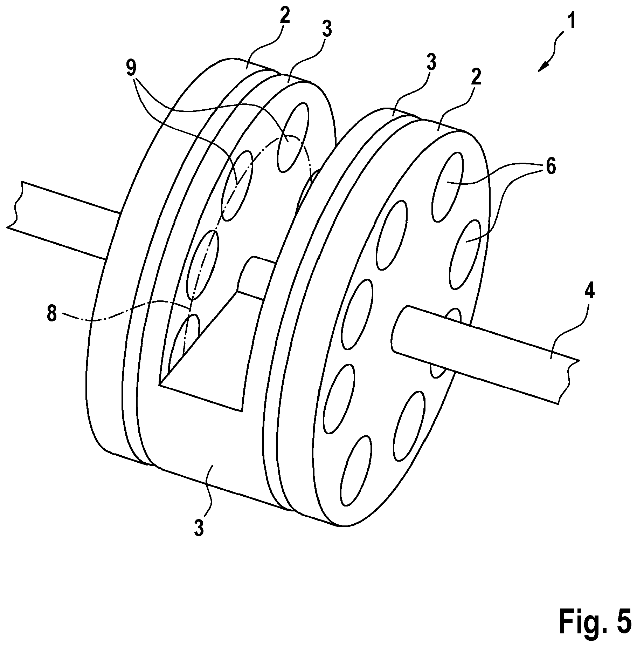

Aus Fig. 5 ist ein mechanischer Schwingungserreger 1 mit analog zu Fig. 4 zwei Statorscheiben 2 und einem einteiligen Umlaufgewicht 3 ersichtlich, welches zumindest an einem axialen Ende, vorliegend an beiden axialen Enden eine volle Kreisscheibe aufweist. Dabei erlaubt die Kreisscheibe eine Anordnung weiterer Magnetspulen 6 entlang der Kreislinie 5, so dass die Leistung des Schwingungserregers 1 gegenüber desjenigen der Fig. 4 weiter verstärkt werden kann.

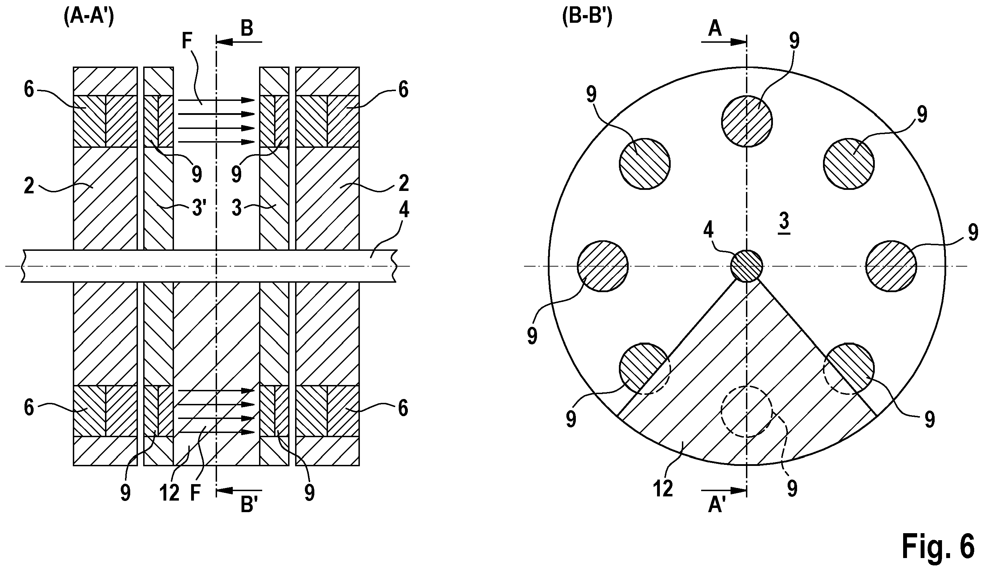

Fig. 6 zeigt einen mechanischen Schwingungserreger 1 gemäß Fig. 5, bei welchem das Umlaufgewicht 3 mehrteilig zu ausgeführt ist. Zwischen den beiden Scheibenteilen 3, 3' umfasst es eine Unwuchtmasse 12, welche gegenüber der Rotationsachse 4 asymmetrisch ausgeführt ist, und welche zumindest zu einem Teil von dem magnetischen Hauptfeld durchdrungen wird. Dabei beinhaltet das magnetische Hauptfeld ein dichtes und wesentliches, für den Antrieb des Motors wirksames Bündel der magnetischen Feldlinien F. In der in Fig. 6 dargestellten Ausführungsform weist die zwischen den Scheibenteilen 3, 3' angeordnete Unwuchtmasse 12 die Form eines Kreissegments mit einem Mittelpunktswinkel von hier ca. 90° auf, welches von einem wesentlichen Teil der für den Antrieb wirksamen Feldlinien F durchströmt wird.

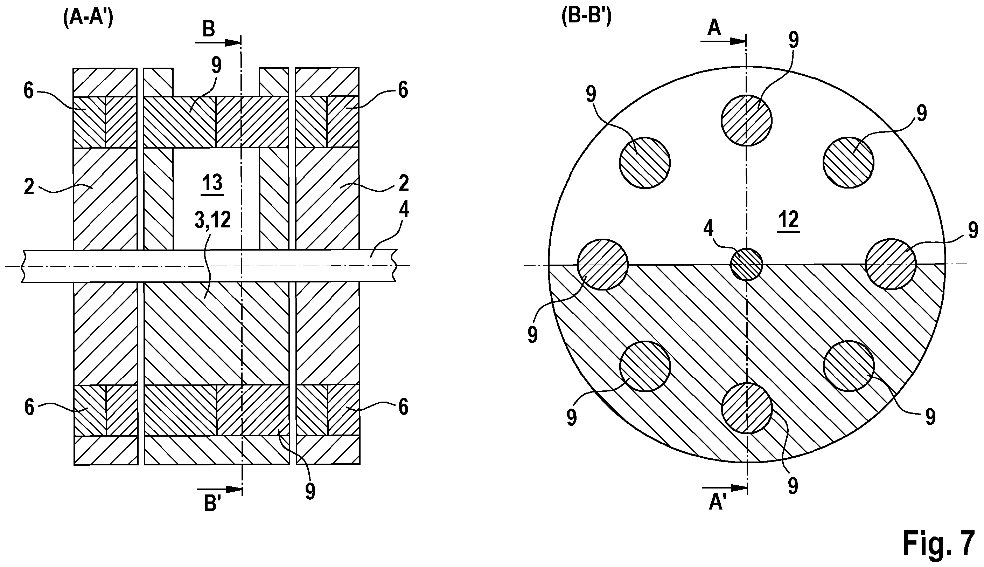

Ein erster wesentlicher Teil der zwischen den Scheibenteilen 3, 3' wirkenden Felder durchströmt die Unwuchtmasse 12, ein anderer wesentlicher Teil durchströmt ein Medium mit geringerer Materialdichte, hier beispielsweise Luft. In einer Ausgestaltungsvariante können die Permanentmagnete 9 der Scheibenteile 3, 3' einstückig und durch das Unwuchtgewicht 12 und/oder das Medium mit geringer Dichte, insbesondere Luft, hindurchgeführt sein. In einer die Unwucht verstärkenden Ausgestaltungsvariante sind die Permanentmagnete 9 außerhalb eines, insbesondere kreissektorförmigen, Bereichs des Unwuchtgewichts 12 zu, wie beispielsweise aus Fig. 6 ersichtlich, je einem Permanentmagnet 9 ausgeführt, und innerhalb eines, insbesondere kreissektorförmigen, Bereichs des Unwuchtgewichts 12 einstückig, wie beispielsweise aus Fig. 7 ersichtlich, durch das Unwuchtgewicht 12 hindurchgeführt.

Fig. 7 zeigt einen mechanischen Schwingungserreger 1, bei welchem die Rotorscheibe 3 sowie das Unwuchtgewicht 12 einstückig als ein Körper ausgeführt sind. Ein derartiger Körper kann beispielsweise ein flacher Zylinder sein, der in einem mittlerem Bereich eine seitliche Ausnehmung 13 aufweist. Eine derartige Ausnehmung 13 kann beispielsweise durch einen tangential zur Rotationsachse 4 geführten Fräskopf erzielt werden, der einen Kreisquerschnitt im mittleren Bereich des Zylinders auf einen Halbkreis reduziert. Analog zu den vorherigen Ausgestaltungsvarianten weist der Zylinder in seinen Stirnflächen auf einer Kreisline angeordnete Permanentmagnete 9 auf, die vorzugsweise einstückig und bis zur gegenüberliegenden Stirnfläche durch den Körper hindurchgeführt sind.

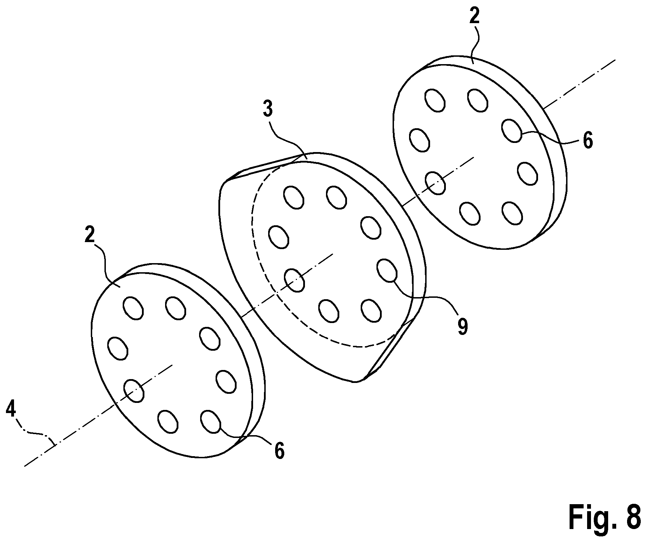

Fig. 8 zeigt eine Explosionsskizze eines weiteren Ausführungsbeispiels des mechanischen Schwingungserregers.

Aus Fig. 8 ist eine Anordnung aus einem Umlaufgewicht 3 und zwei Statorscheiben 2 ersichtlich, wobei das Umlaufsgewichts 3 seitlich von je einer Statorscheibe 2 antreibbar ist, und wobei ein Umfang sowie ein Außenradius des Umlaufgewichts 3 den Umfang und den Außenradius der Statorscheiben 2 übertreffen.

## Patentansprüche

1. Mechanischer Schwingungserreger (1), insbesondere um relativ große Massen in vergleichsweise niedrige Schwingungsfrequenzen zu versetzen, und insbesondere für einen Einsatz in einer Baumaschine,
**dadurch gekennzeichnet, dass**
ein Antriebsmotor zumindest teilweise in ein auf einer Rotationswelle (4) angeordnetes Umlaufgewicht (3) integriert ist.

2. Mechanischer Schwingungserreger (1) nach Anspruch 1, **dadurch gekennzeichnet, dass** der mechanische Schwingungserreger (1) ein direkt angetriebenes, insbesondere ferromagnetisch direkt angetriebenes, Umlaufgewicht (3) aufweist.

3. Mechanischer Schwingungserreger (1) nach Anspruch 1 oder 2, **dadurch gekennzeichnet, dass** das Umlaufgewicht (3) durch ein parallel zur Rotationswelle (4), d.h. axial, orientiertes Magnetfeld antreibbar ist.

4. Mechanischer Schwingungserreger (1) nach einem der vorherigen Ansprüche, **dadurch gekennzeichnet, dass** in dem Umlaufgewicht (3) Wirbelströme induzierbar sind, oder magnetisch wirkende Körper (6), (9) eingelassen sind, dies es ermöglichen, das Umlaufgewicht (3) durch äußerlich einwirkende magnetische Felder (F) in Rotation zu versetzen.

5. Mechanischer Schwingungserreger (1) nach einem der vorherigen Ansprüche, **dadurch gekennzeichnet,**
**dass** das Umlaufgewicht (3) als Scheibensektor oder Ringsektor einer Wirbelstromscheibe (13) ausgeführt ist oder einen Scheibensektor oder Ringsektor einer Wirbelstromscheibe (13) aufweist.

6. Mechanischer Schwingungserreger (1) nach einem der Ansprüche 4 bis 5, **dadurch gekennzeichnet,**
**dass** die durch Wirbelströme oder magnetisch wirkende Körper (6), (9) erzeugten Magnetfelder (F) senkrecht auf dem Umlaufgewicht (3), parallel zu der Rotationswelle (4) stehen.

7. Mechanischer Schwingungserreger (1) nach einem der Ansprüche 4 bis 6, **dadurch gekennzeichnet,**
**dass** die magnetisch wirkenden Körper (9), insbesondere die magnetisch wirkenden Körper (9) des Umlaufgewichts (3), als Dauermagnete (9), insbesondere als Neodym-Magnete ausgeführt sind.

8. Mechanischer Schwingungserreger (1) nach einem der Ansprüche 4 bis 6, **dadurch gekennzeichnet,**
**dass** die magnetisch wirkenden Körper (6), insbesondere die magnetisch wirkenden Körper (9) des Umlaufgewichts (3), als Magnetspulen (6) ausgeführt sind.

9. Mechanischer Schwingungserreger (1) nach einem der vorherigen Ansprüche, **dadurch gekennzeichnet,**
**dass** das Umlaufgewicht (3) nach dem Prinzip eines Scheibenläufermotors antreibbar ist.

10. Mechanischer Schwingungserreger (1) nach einem der vorherigen Ansprüche, **dadurch gekennzeichnet,**
**dass** neben dem Umlaufgewicht (3) an zumindest einer axialen Seite ein Kreisbogen, insbesondere ein Kreisring, magnetisch wirkender Körper (6), (9) angeordnet ist und eingerichtet ist, ein parallel zur Rotationswelle (4) orientiertes Magnetfeld zu erzeugen.

11. Mechanischer Schwingungserreger (1) nach einem der vorherigen Ansprüche, **dadurch gekennzeichnet,**
**dass** neben dem Umlaufgewicht (3) axial beidseitig jeweils ein Kreisbogen, insbesondere einen Kreisring, magnetisch wirkender Körper (6), (9) angeordnet ist und eingerichtet ist, ein parallel zur Rotationswelle (4) orientiertes Magnetfeld zu erzeugen.

12. Mechanischer Schwingungserreger (1) nach Anspruch 10 oder 11, **dadurch gekennzeichnet, dass** das Umlaufgewicht (3) die Form eines allgemeinen Zylinders, insbesondere die Form eines Kreiszylinders mit einer axial etwa mittig gelegenen kreissegmentförmigen Ausnehmung, aufweist.

13. Mechanischer Schwingungserreger (1) nach Anspruch 10 oder 11, **dadurch gekennzeichnet, dass** das Umlaufgewicht (3) mehrteilig, insbesondere axial mehrschichtig, ausgeführt ist.

14. Bodenverdichtungsvorrichtung zur Verdichtung eines Untergrundes, umfassend einen Unterwagen mit einer Grundplatte, einen Oberwagen, der schwingungsentkoppelt und in Kraft übertragender Weise mit dem Unterwagen verbunden ist und zumindest einen mechanischen Schwingungserreger (1) nach einem der vorherigen Ansprüche, mittels dessen zumindest die Grundplatte des Unterwagens in eine Schwingung versetzbar ist.
